# EUROPEAN PATENT SPECIFICATION

(11) **EP 3 341 242 B1**
(45) Date of publication and mention of the grant of the patent: **25.09.2019**
(21) Application number: 16750395.2
(22) Date of filing: 19.07.2016
(51) Int. Cl.: B60N 2/28, B62B 7/12

(54) **A CHILD SEAT, A STROLLER COMPRISING SUCH A CHILD SEAT AS WELL AS AN ADDITIONAL SEAT FOR SUCH A CHILD SEAT**
KINDERSITZ, KINDERWAGEN MIT SOLCH EINEM KINDERSITZ SOWIE ZUSÄTZLICHER SITZ FÜR SOLCH EINEN KINDERSITZ
SIÈGE POUR ENFANT, POUSSETTE COMPRENANT UN TEL SIÈGE POUR ENFANT AINSI QU'UN SIÈGE SUPPLÉMENTAIRE POUR UN TEL SIÈGE POUR ENFANT

(30) Priority: 27.08.2015 NL 2015358
(43) Date of publication of application: 04.07.2018
(73) Proprietor: Maxi Miliaan B.V., 5704 RD Helmond (NL)
(72) Inventor: BORSBOOM, Monique, 5644 LP Eindhoven (NL); BLOKX, Sabine Gerarda Laurent, 5021 BX Budel (NL); PIJNENBURG, Willem, 5021 BX Budel (NL); SOLDAAT VAN ROIJ, Danielle Thea Petra, 5402 CS Uden (NL)
(74) Representative: Veldman-Dijkers, Cornelia G. C.
(86) International application number: PCT/EP2016/067220
(87) International publication number: WO 2017/032511

(56) References cited:
- EP-A1- 0 422 812
- EP-A2- 1 398 262
- WO-A1-2012/104575

## Description

### FIELD OF THE INVENTION

The invention relates to a child seat comprising at least a frame, a backrest and a seating portion, wherein the backrest and the seating portion are connected to the frame and are connected to each other at an apex remote of the frame, which child seat is provided with a detachable additional seat.

The invention also relates to a stroller comprising such a child seat as well as an additional seat for such a child seat.

### BACKGROUND OF THE INVENTION

Such a child seat connected to a stroller is known from WO2012104575A1. The child seat according to WO2012104575A1 comprises a back portion and a seat portion. The back portion and seat portion converge at an apex so as to that the child seat has a generally L-shaped (wedge-shaped) configuration. The rake of the child seat is determined by the apex angle between the back portion and the seat portion.

As mentioned in WO2012104575A1 many health professionals recommend that very young children, for example, children up to approximately six months old, should lie in a substantially flat position whenever possible. The flat position aids breathing and thereby avoids oxygen saturation. The flat position also promotes spinal development.

Accordingly, a child seat that is intended to be used from birth should preferably allow a child to lie in a substantially flat position. Under European Standard EN 1888, a wheeled child conveyance is only considered to be suitable for use from birth if the child seat can be adjusted to have a rake angle of 150 degrees or more.

The stroller according to WO2012104575A1 is provided with a wedge-shaped body portion comprising an upper surface for supporting at least part of a child located in the seat, a first lower surface for mating with at least a part of a back portion of the seat and a second lower surface for mating with at least a part of a seat portion of the seat.

Although the wedge-shaped body portion reduces the rake of the child seat, such that the child seat has a rake falling in the range of approximately 150 to 180 degrees, rendering the child seat suitable for use from birth, it has the disadvantage that the wedge-shaped body portion has a relatively large volume and can not easily be stored. Further disadvantages of this known stroller are that the child seat is not foldable in the frame in two or three directions and that it is not or nearly not possible to wash the seat as a whole.

### SUMMARY OF THE INVENTION

At least one of the objects of the invention is to provide a child seat, which can easily be adapted to be suitable for use from birth.

Another object of the invention is to provide a child seat whereby the rake of the child seat can easily be amended.

This object is accomplished with the child seat according to the invention in that the frame comprises at least a first frame part and a second frame part, wherein the backrest is at least connected to the first frame part and the seating portion is at least connected to the second frame part, which first and second frame parts are pivotable with respect to each other about a pivot axis from an unfolded position to a folded position, and vice versa, wherein the additional seat is detachably connected with the first end to a first frame part near an end of the backrest remote of the apex, and detachably connected with a second end to the second frame part of the child seat near an end of the seating portion remote of the apex, which additional seat extends at a distance of the apex, whereby the additional seat being pivotable simultaneously with the child seat..

By connecting the additional seat to the frame of the child seat, the additional seat needs not to be provided with an own supporting construction. The additional seat makes use of the already available frame of the child seat to which it is detachably attached. The additional seat is detachably connected to the child seat, so it can easily be removed to use the child seat for an older child to sit. As the additional seat does not need to comprise a supporting construction, it can easily be folded and stored.

Since the additional seat extends at a distance of the apex, the rake of the additional seat will be less than the rake of the child seat. The same frame can be used to provide a support of the child with different rakes.

The apex of the additional seat will be located lower than the frame, due to which the child will be safely located in the additional seat and will not fall out of the additional seat.

The child seat can be used on a stroller, as a child vehicle seat or as a stand alone child seat.

Since the child seat can be folded from an unfolded position to a folded position by pivoting the first and second frame parts towards each other, the child seat can easily be transported. As the additional seat is pivotable simultaneously with the first and second frame parts of the child seat to which it is detachably connected, the additional seat does not to be removed from the child seat and no additional actions need to be taken before folding the child seat. When unfolding the child seat, the additional seat will automatically be unfolded together with the child seat.

An embodiment of the child seat according to the invention is characterized in that the first and second frame parts are foldable in a direction parallel to the pivot axis from the unfolded position to the folded position, and vice versa, which additional seat being pivotable and foldable simultaneously with the child seat.

By also folding the child seat as well as the additional seat in a direction parallel to the pivot axis, the child seat will even take less space in the folded position.

As the additional seat is foldable simultaneously with the child seat, the additional seat does not to be removed from the child seat and no additional actions need to be taken before folding the child seat. When unfolding the child seat, the additional seat will automatically be unfolded together with the child seat.

Another embodiment of the child seat according to the invention is characterized in that the additional seat is detachably attached to the child seat in a folded position of the child seat, whilst the additional seat is stretched in the frame in the unfolded position of the child seat.

In the folded position the frame parts will be located closer to each other, so that the additional seat can easily be attached to the frame parts. When unfolding the child seat, the frame parts will be pivoted away from each other, whereby the first and second ends of the additional parts will also be moved away from each other so that the additional seat is stretched between the first and second frame part. In case that the first and second frame parts are also foldable in a direction parallel to the pivot axis, the additional seat will also be stretched in the first frame part and/or the second frame part when moving the child seat from the folded position to the unfolded position.

In this manner, no additional tensioning devices are needed to firmly connect the additional seat to the child seat.

Another embodiment of the child seat according to the invention is characterized in that at least the first end or the second end of the additional seat is slidable over the frame of the child seat.

By sliding the additional seat over the frame of the child seat, the additional seat can easily be attached to the frame. Preferably the frame is wider near the middle than near its ends so the sliding of the additional seat over the frame is automatically stopped as soon as the frame is wider than the additional seat.

Another embodiment of the child seat according to the invention is characterized in that the additional seat is provided with at least a backrest part and a leg supporting part, which backrest part and leg supporting part extend at an angle between 150 and 180 degrees with each other.

By having a rake between the backrest part and leg supporting part being less than 180 degrees and preferably larger than 150 degrees, a child of less than 6 months can be supported by the additional seat in a comfortable manner.

The shape and size of the parts influence the angle of the rake.

Another embodiment of the child seat according to the invention is characterized in that the additional seat is provided with at least a backrest part and a leg supporting part as well as a buttock part located between the backrest part and the leg supporting part, which buttock part extends at an angle between 150 and 180 degrees with respect to the backrest part and the leg supporting part.

With such an additional seat a smoother transition from the backrest part to the leg supporting part is obtained.

Another embodiment of the child seat according to the invention is characterized in that the buttock part extends substantially horizontal.

This provides a comfortable position for the child.

Another embodiment of the child seat according to the invention is characterized in that the child seat is provided with a child restrain system, wherein the additional seat comprises apertures to extend the child restrain system there through.

Since the same child restrain system can be used for the child seat as well as the additional seat, the additional seat needs not to be provided with an own child restrain system.

Another embodiment of the child seat according to the invention is characterized in that the additional seat is a hammock.

Such a hammock can easily be tensioned in the frame of the child seat and will comfortably support a child.

Another embodiment of the child seat according to the invention is characterized in that the additional seat is made of a fabric only.

Such an additional seat can easily be made at relatively low costs.

The invention also relates to a stroller comprising such a child seat, which stroller comprises at least one front wheel and at least one rear wheel, which wheels are interconnected by means of a collapsible folding mechanism, which stroller being foldable from an erect position to a collapsed position, and vice versa.

The child seat is supported by the collapsible folding mechanism.

An embodiment of the stroller according to the invention is characterized in that the child seat and the detachable attached additional seat are at least foldable from an unfolded position to a folded position, and vice versa simultaneously with folding the stroller from an erect position to a collapsed position, and vice versa.

By folding the stroller, the child seat as well as the additional seat simultaneously, the operation of the folding and unfolding is relatively easy.

### BRIEF DESCRIPTION OF THE DRAWINGS

The child seat, stroller and additional seat according to the invention will further be explained with reference to the drawings, wherein,
figure 1 is a perspective view of a stroller comprising a child seat,
figures 2A and 2B are a top view and bottom view of an additional seat according to a first embodiment of the invention,
figure 3 is an exploded top view of a part of the additional seat as shown in the figures 2A and 2B,
figure 4 is a perspective view the stroller and child seat as shown in figure 1, wherein the child seat is provided with an additional seat as shown in figures 2A, 2B and 3,
figure 5 is a schematic view in cross direction of a child seat as shown in figure 1,
figures 6 is a schematic view in cross direction of the additional seat as shown in figures 2A, 2B and 3, and the child seat as shown in figure 5,
figure 7 is a schematic view in cross direction of an additional seat according to a second embodiment of the invention,
figure 8 is a schematic view in cross direction of an additional seat according to a third embodiment of the invention,
figures 9A-9E are perspective views of different phases during the folding of the stroller, child seat and additional seat as shown in figure 3.

In the drawings, like reference numerals refer to like elements.

### DESCRIPTION OF PREFERRED EMBODIMENTS

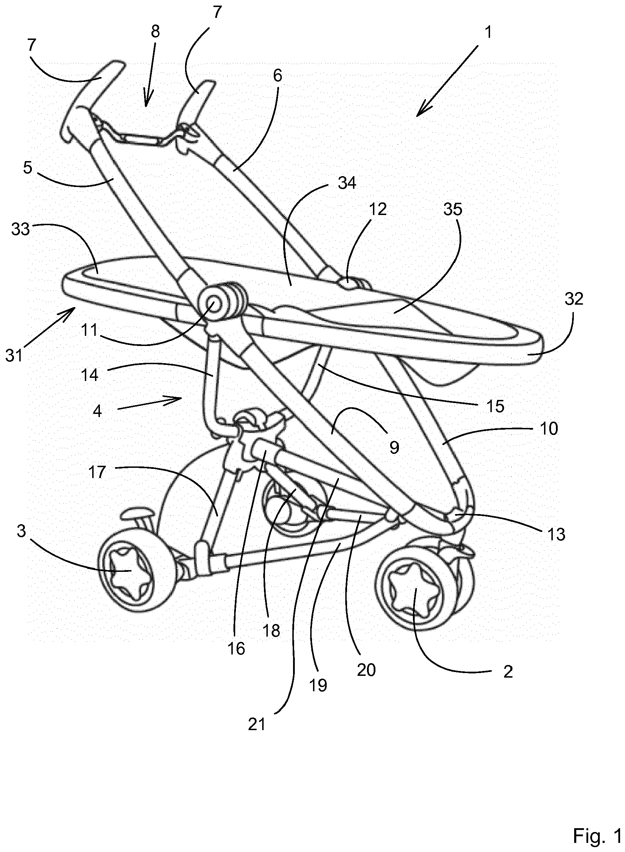

Figure 1 shows a stroller 1 which is known for example from WO2015000893 of applicant. The stroller 1 comprises a front wheel 2 and two rear wheels 3, which wheels 2, 3 are interconnected by means of a collapsible folding mechanism 4. The folding mechanism 4 comprises two push rods 5, 6 extending parallel to each other, which are fitted with a handle 7 at one end. A locking mechanism 8 extends between the handles 7. At their ends remote from the handles 7 the push rods 5,6 are pivotally connected to rods 9, 10 about first pivot axis 11, 12. At their ends remote from the push rods 5, 6, the rods 9, 10 are interconnected by means of a support 13. The front wheel 2 is pivotally connected about a vertically extending axis to the support 13. The first pivot axis 11, 12 are each provided on an end part of the rods 9, 10. On the end parts of the rods 9, 10 are furthermore provided second pivot axis to which ends of J-shaped rods 14, 15 are connected. The J-shaped rods 14, 15 are pivotally connected at their ends remote from the second pivot axis to a bushing 16 forming a central joint. Two wheel supporting rods 17, 18 are also pivotally connected to the bushing 16. Each wheel supporting rod 17, 18 has one rear wheel 3 mounted thereto at the end remote from the bushing 16, which rear wheels 3 are rotatable about a horizontally extending axis. The wheel supporting rods 17, 18 are furthermore pivotally connected to intermediate rods 19, 20 at their ends remote from the bushing 16. The rear wheels 3 are mounted on the intermediate rods 19, 20. The intermediate rods 19, 20 are pivotally attached to the support 13 about third pivot axes remote from the rear wheels 3 near the front wheel 2. The support 13, which is positioned near the front wheel 2, is connected to an end of a rod 21 which is slidably accommodated in the bushing 16 with an end remote from the support 13. The J-shaped rods 14,15 and the wheel supporting rods 17, 18 together form a cross-shaped linkage system. The rods 14, 15, 17, 18 of the cross-shaped linkage system are pivotally connected to the central joint comprising the bushing 16.

More detailed information about the stroller 1 can be found in WO2015000893, which is incorporated by reference.

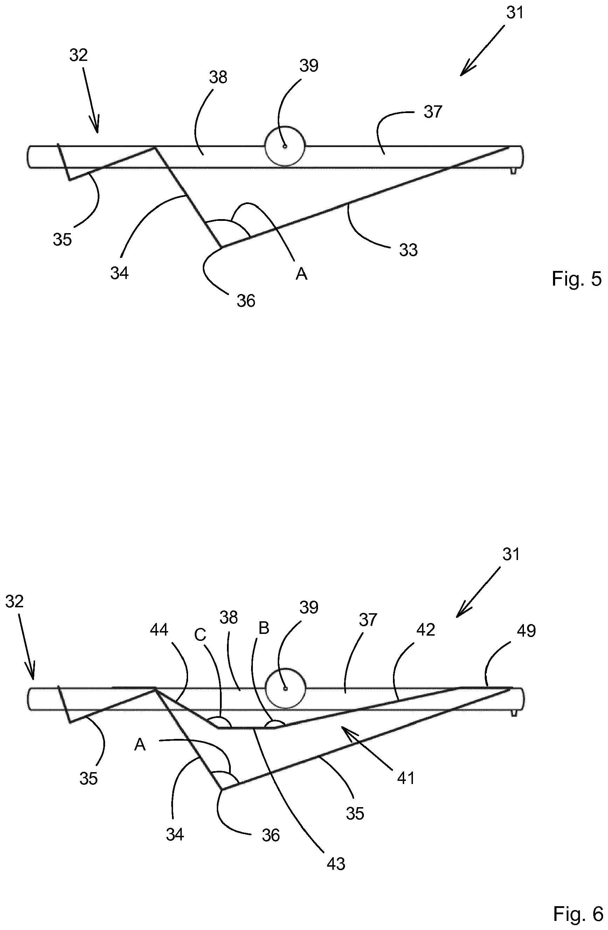

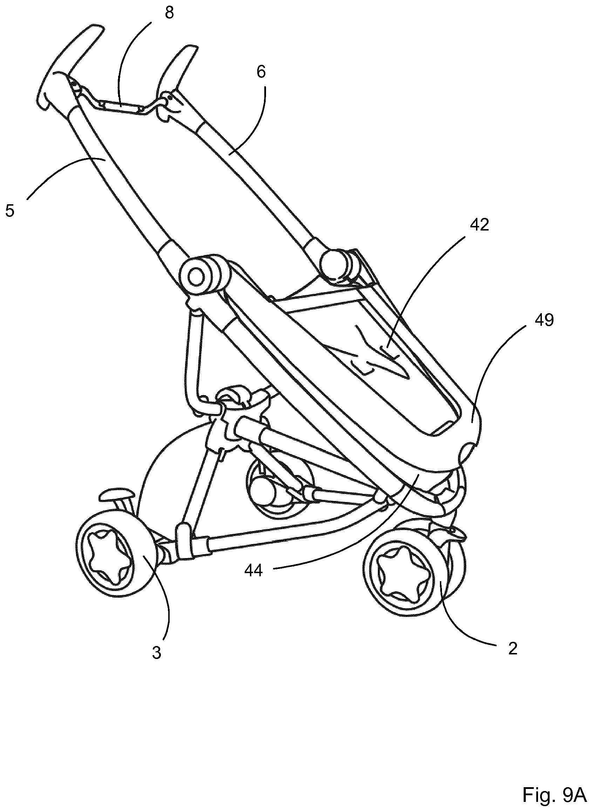

The stroller 1 comprises a child seat 31 provided with an oval-shaped frame 32. The child seat 31 comprises a backrest 33, a seating portion 34 and a leg supporting portion 35. The backrest 33 and the seating portion 34 are connected to the frame 32 and are connected to each other at an apex 36 remote of the frame 32. The apex 36 can best be seen in figure 5. The frame 32 comprises a first frame part 37 and a second frame part 38, wherein the backrest 33 is connected with an end remote of the apex 36 to the first frame part 37 and the seating portion 34 is connected with an end remote of the apex 36 to the second frame part 38. The first and second frame parts 37, 38 are pivotable with respect to each other about a pivot axis 39 from an unfolded position as shown in figure 1 to a folded position as shown in the figures 9A-9E, and vice versa. The first and second frame parts 37, 38 each comprises two parts located respectively near one of the push rods 5,6, whereby the parts of each frame part 37, 38 is foldable in a direction parallel to the pivot axis 39 to move the parts towards each other during the folding of the child seat 31 from the unfolded position to the folded position.

The child seat 31 is provided with a child restrain system comprising two shoulder belts as well as a crotch belt, which can be locked to each other to maintain a child inside the child seat 31. Such a child restrain system is known as such and will not further be explained.

The child seat 31 is detachably connected to the stroller 1 and pivotable with respect to the first pivot axis 11, 12 of the stroller 1 to be able to let a child seated in the child seat 1 take a more laying position or a more sitting straight position.

The rake A between the backrest 33 and the seating portion 34 is about 90 degrees. Such a rake A is well suited for children elder than 6 months. However, for younger children such a rake A is too small.

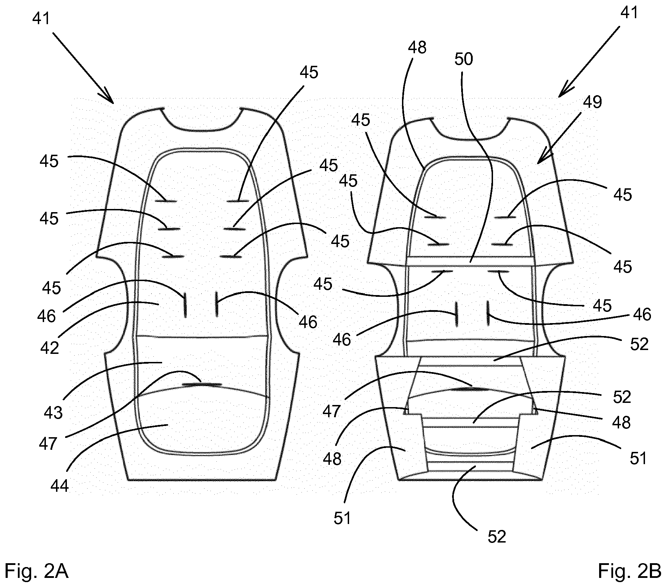

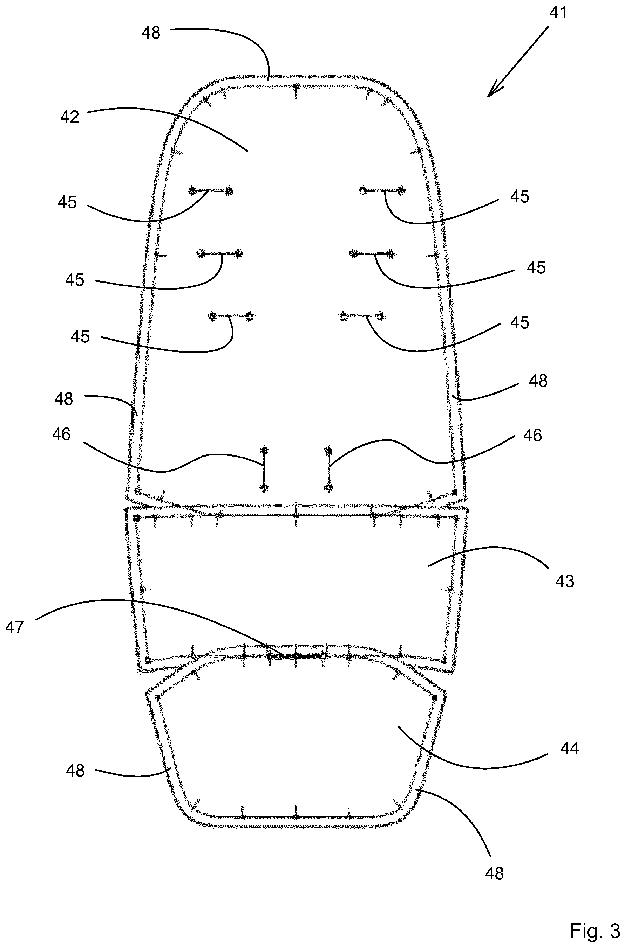

Figures 2A, 2B and 3 show different views of an additional seat 41 according to the invention.

The additional seat 41 is made of a fabric like a textile. It comprises three main parts 42, 43, 44. The part 42 comprises apertures 45, 46, 47 for the shoulder belts, hip belt and the crotch belt of a five-point child restrain system of the child seat 31. The part 42 forms a backrest of the additional seat 41. Connected to part 42, is part 43 which forms a flat buttock part of the additional seat 41. At a side remote of part 42, the part 43 is connected to part 44. The part 44 forms a leg supporting part. Edges 48 of the part 42 are connected to a U-shaped sleeve 49. Ends of the U-shaped sleeve 49 are connected to each other by a strip shaped part 50, preferably made of fabric. Edges 48 of the part 44 are connected to two U-shaped elongated parts 51. The elongated U-shaped parts 51 are at the rear of the addition seat 41, connected to each other by strip shaped parts 52, preferably made of fabric.

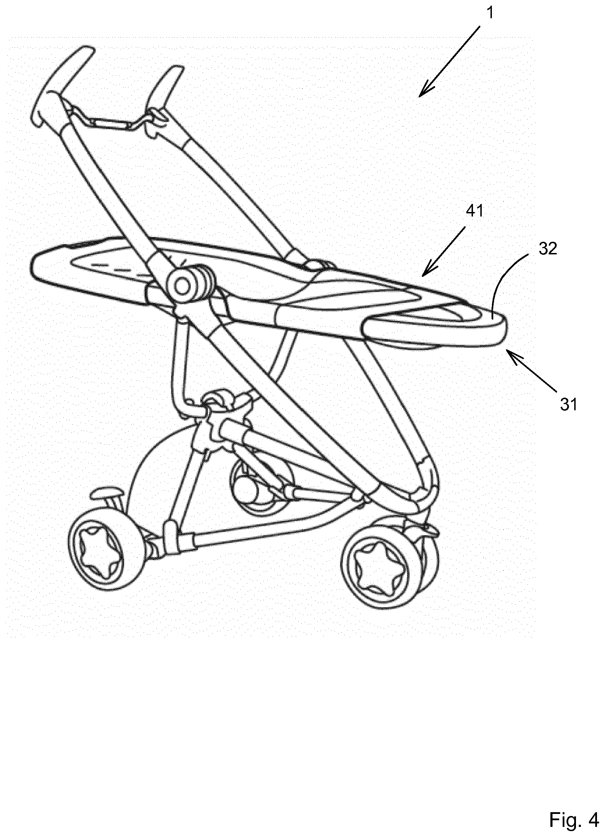

Figure 4 shows the stroller 1 with the child seat 31 as shown in figure 1 to which the additional seat 41 is detachably attached. Hereto the U-shaped sleeve 49 connected to part 42 is slit over the first frame part 37, whereby an upper part of the U-shaped sleeve 49 and the part 42 will become located on top of the first frame part 37, whilst a lower part of the U-shaped sleeve 49 as well as the strip shaped part 50 will become located against the bottom of the first frame part 37. In the same manner, the part 44 is slit over the second frame part 38, whereby upper parts of the elongated U-shaped parts 51 and of part 44 will become located on top of the second frame part 38, whilst lower parts of the elongated U-shaped parts 51 and as well as the strip shaped parts 52 will become located against the bottom of the second frame part 38. As can be seen in figures 4 and 6 an end of the additional seat 41 is located near an end of the backrest 33 of the child seat 31 remote of the apex 36, whilst another end of the additional seat 41 is located near an end of the seating portion 34 remote of the apex 36.

Preferably, the mounting of the additional seat 41 onto the child seat 31 is done, whilst the child seat 31 is in a folded position. After mounting the additional seat 41 onto the child seat 31, the child seat 31 will be unfolded, whereby the additional seat is stretched in the frame parts 37, 38 of the frame 32 of the child seat 31. In this manner, the additional seat 41 can easily be mounted without any force onto the child seat 41, whilst in the unfolded position the additional seat 41 is firmly connected to the child seat 31. The additional seat 41 functions as a hammock.

Figure 6 shows a schematic cross section of the additional seat 41 as attached to the frame 32 and located above the child seat 31. The rake B between the part 42 forming a backrest part and the part 43 as well as the rake C between the part 43 forming a flat buttock part and the part 44 forming a leg supporting part are both much large than the rake A and are preferably between 150 and 180 degrees. Such shape of the additional seat 41 renders the additional seat 41 suitable for children from birth up to 6 months, whereby the child lies almost flat and horizontal on the additional seat 41. The part 42, 43, 44 are located at a distance above the apex A but lower than frame 32, preventing that the child will fall out of the additional seat 41.

Since the additional seat 41 is made from a fabric, it can easily be folded simultaneously with the folding of the child seat 31.

As the additional seat 41 is made from a fabric and does not comprise a frame of its own to give the additional seat 41 a preferred shape, the additional seat 41 can, after be removed from the child seat 31, easily be folded flat and stored, whereby it will take nearly no space.

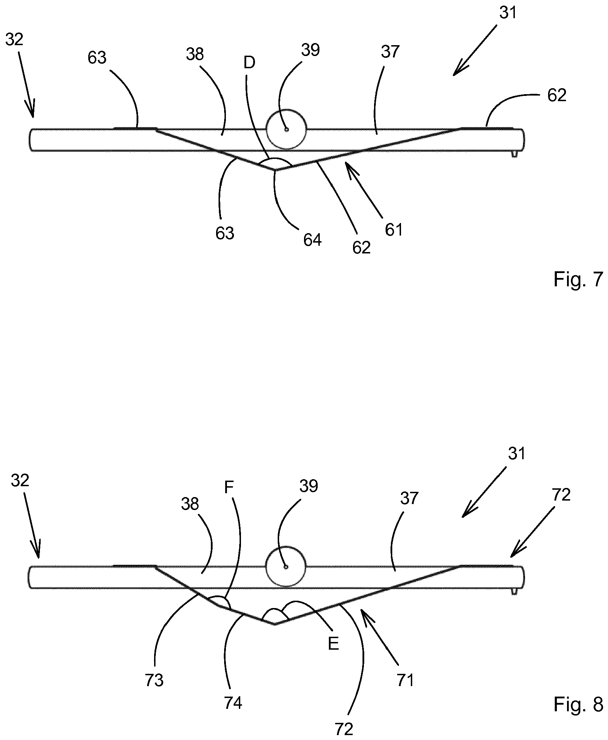

Figure 7 shows a second embodiment of the additional seat 61, which differs from the additional seat 41 in that it only comprises a backrest part 62 and a leg supporting part 63 being interconnected at an apex 64. The backrest part 62 and the leg supporting part 63 can be attached to the frame 32 in the same manner as the parts 42, 44 of the additional seat 41. The rake D between the backrest part 62 and the leg supporting part 63 is preferably between 150 and 180 degrees, for example 150 degrees. Such an additional seat 61 has a simple pattern, which can be produces relatively easily and quick.

Figure 8 shows a third embodiment of the additional seat 71, which differs from the additional seat 41 in that it comprises a backrest part 72 and a leg supporting part 73 and a buttock part 74 extending between the backrest part 72 and the leg supporting part 73. However, the buttock part 74 does not extend horizontal as by the additional seat 41 but upwards towards the second frame part 38.

The rake E between the backrest part 72 and the buttock part 74 as well as the rake F between the buttock part 74 and the leg supporting part 73 are preferably between 150 and 180 degrees.

Since the lowest part of the additional seat 71 is located at a relatively large distance from the frame 32, the risk that a child will fall out of the additional seat 71 is minimized.

For the sake of clarity, the child seat 31 is not shown in the figures 7 and 8, but is however also connected to the frame 32.

Figures 9A-9E show the folding from the stroller 1 provided with the child seat 31 and the additional seat 41.

In figure 9A the first frame part 37 is pivoted about the pivot axis 39 towards the second frame part 38. The frame parts 37, 38 are partly hidden from view by the parts 42 and 44 and the sleeve 49 of the additional seat 41.

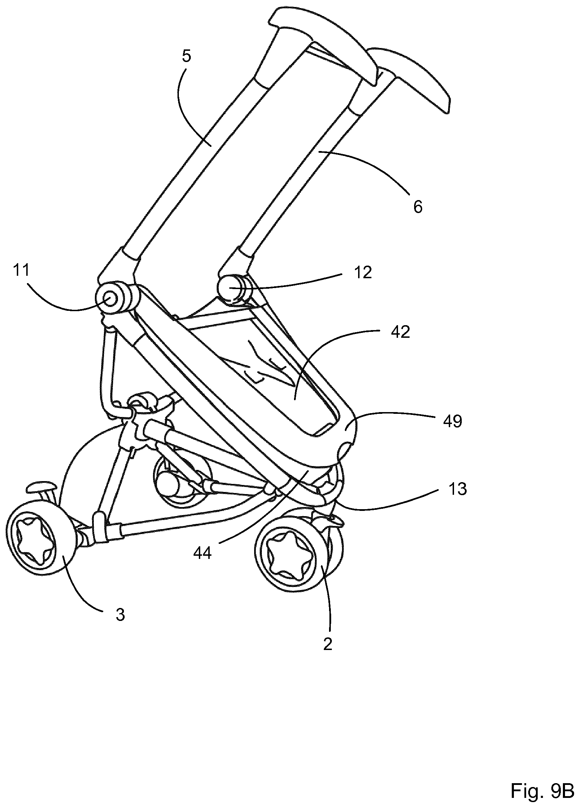

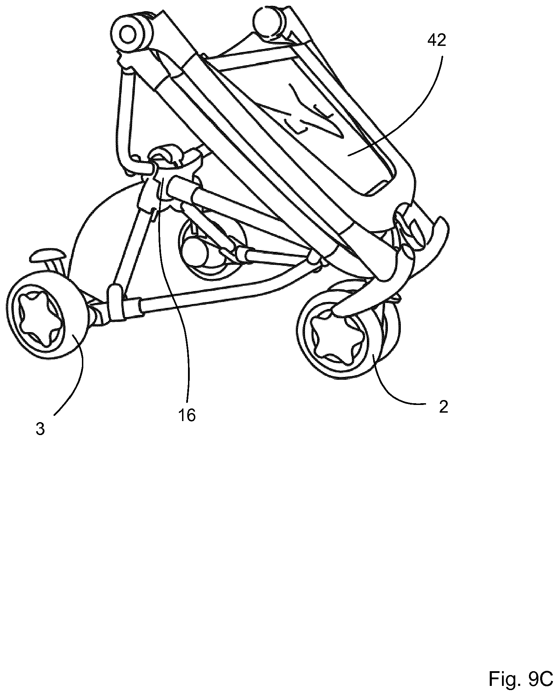

In the next step, the locking mechanism 8 is unlocked to be able to pivot the two push rods 5,6 about the pivot axis 11, 12 from the position as shown in figure 9A via the position as shown in figure 9B to the position as shown in figure 9C.

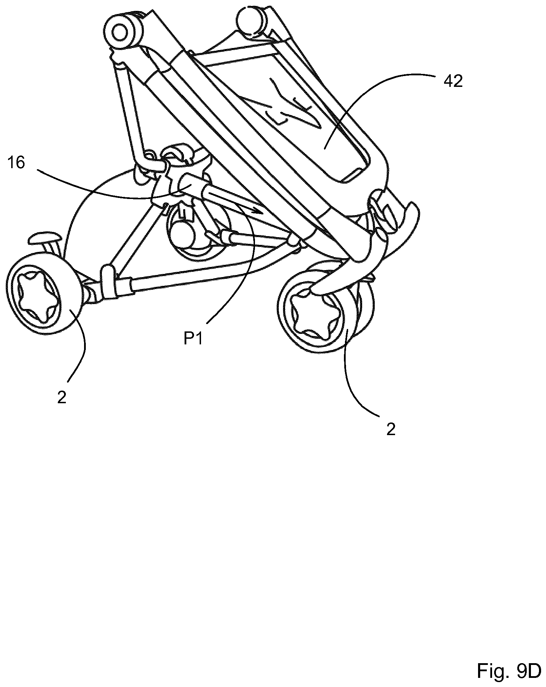

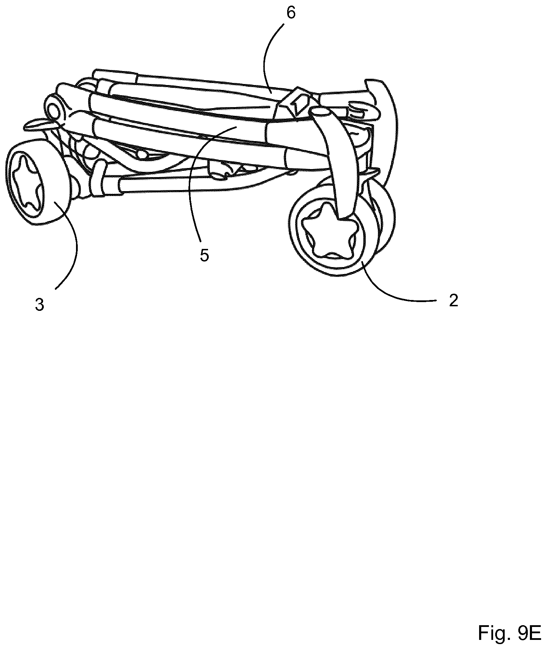

Then the bushing 16 is moved in the direction indicated by arrow P1 towards the support 13, whereby the rods 14, 15, 17, 18 of the cross-shaped linkage system are pivoted towards each other (figure 9D). By doing so, also the pivot axis 11, 12 are moved towards each other in a direction parallel to the pivot axis 11, 12, thereby folding the stroller 1, the child seat 31 and the additional seat 41 together (see figure 9E).

The additional seat 41 can be made only of a fabric. However, it is possible to provide the additional seat 41 with elastic straps, or velcro straps to be able to attach and detach the additional seat 41 to and from the frame 32.

The person skilled in the art will realize that the present invention is by no means limited to the preferred embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the scope should not be construed as limiting the scope of the claims.

### LIST OF REFERENCE SIGNS

- 1: stroller
- 2: front wheel
- 3: rear wheel
- 4: folding mechanism
- 5: push rod
- 6: push rod
- 7: handle
- 8: locking mechanism
- 9: rod
- 10: rod
- 11: first pivot axis
- 12: first pivot axis
- 13: support
- 14: J-shaped rod
- 15: J-shaped rod
- 16: bushing
- 17: wheel supporting rod
- 18: wheel supporting rod
- 19: intermediate rod
- 20: intermediate rod
- 21: rod
- 31: child seat
- 32: frame
- 33: backrest
- 34: seating portion
- 35: leg supporting portion
- 36: apex
- 37: first frame part
- 38: second frame part
- 39: pivot axis
- 41: additional seat
- 42: part
- 43: part
- 44: part
- 45: aperture
- 46: aperture
- 47: aperture
- 48: edge
- 49: U-shaped sleeve
- 50: strip shape part
- 51: U-shaped elongated part
- 52: strip shape part
- 61: additional seat
- 62: backrest part
- 63: leg supporting part
- 64: apex
- 71: additional seat
- 72: backrest part
- 73: leg supporting part
- 74: buttock part
- A: rake
- B: rake
- C: rake
- D: rake
- E: rake
- F: rake
- P1: arrow

## Claims

1. A child seat (31) comprising at least a frame (32), a backrest (33) and a seating portion (34), wherein the backrest (33) and the seating portion (34) are connected to the frame (32) and are connected to each other at an apex (36) remote of the frame (32), which child seat (31) is provided with a detachable additional seat (41, 61, 71), **characterized in that** the frame (32) comprises at least a first frame part (37) and a second frame part (38), wherein the backrest (33) is at least connected to the first frame part (37) and the seating portion (34) is at least connected to the second frame part (38), which first and second frame parts (37, 38) are pivotable with respect to each other about a pivot axis (39) from an unfolded position to a folded position, and vice versa, wherein the additional seat (41, 61, 71) is detachably connected with a first end to the first frame part (37) near an end of the backrest remote of the apex and detachably connected with a second end to the second frame part (38) of the child seat (31) near an end of the seating portion (34) remote of the apex (36), which additional seat (41, 61, 71) extends at a distance of the apex (36), whereby the additional seat (41, 61, 71) being pivotable simultaneously with the child seat (31).

2. A child seat (31) according to claim 1, **characterized in that** the first and second frame parts (37, 38) are foldable in a direction parallel to the pivot axis (39) from the unfolded position to the folded position, and vice versa, which additional seat (41, 61, 71) being pivotable and foldable simultaneously with the child seat (31).

3. A child seat (31) according to claim 1 or 2, **characterized in that** the additional seat (41, 61, 71) is detachably attached to the child seat (31) in a folded position of the child seat (31), whilst the additional seat (41, 61, 71) is stretched in the frame (32) in the unfolded position of the child seat (31).

4. A child seat (31) according to one of the preceding claims, **characterized in that** at least the first end or the second end of the additional seat (41, 61, 71) is slidable over the frame (32) of the child seat (31).

5. A child seat (31) according to one of the preceding claims, **characterized in that** the additional seat (41, 61, 71) is provided with at least a backrest part (42, 62, 72) and a leg supporting part (44, 63, 73), which backrest part (42, 62, 72) and leg supporting part (44, 63, 73) extend at an angle between 150 and 180 degrees with each other.

6. A child seat (31) according to one of the preceding claims 1-4, **characterized in that** the additional seat (41, 61, 71) is provided with at least a backrest part (42, 62, 72) and a leg supporting part (44, 63, 73) as well as a buttock part (43, 74) located between the backrest part (42, 62, 72) and the leg supporting part (44, 63, 73), which buttock part (43, 74) extends at an angle between 150 and 180 degrees with respect to the backrest part (42, 62, 72) and the leg supporting part (44, 63, 73).

7. A child seat (31) according to claim 6, **characterized in that** the buttock part (43, 74) extends substantially horizontal.

8. A child seat (31) according to one of the preceding claims, **characterized in that** the child seat (31) is provided with a child restrain system, wherein the additional seat (41, 61, 71) comprises apertures (45, 46, 47) to extend the child restrain system there through.

9. A child seat (31) according to one of the preceding claims, **characterized in that** the additional seat (41, 61, 71) is a hammock.

10. A child seat (31) according to one of the preceding claims, **characterized in that** the additional seat (41, 61, 71) is made of a fabric only.

11. A stroller (1) comprising at least one front wheel (2) and at least one rear wheel (3), which wheels (2, 3) are interconnected by means of a collapsible folding mechanism, which stroller (1) being foldable from an erect position to a collapsed position, and vice versa, wherein the stroller (1) is provided with a child seat (31) and an additional seat (41, 61, 71) according to one of the preceding claims.

12. A stroller (1) according to claim 11, **characterized in that** the child seat (31) and the detachable attached additional seat (41, 61, 71) are at least foldable from an unfolded position to a folded position, and vice versa simultaneously with folding the stroller (1) from an erect position to a collapsed position, and vice versa.

13. Additional seat (41, 61, 71) according to one of the preceding claims.

## Patentansprüche

1. Kindersitz (31), mindestens umfassend einen Rahmen (32), eine Rückenlehne (33) und einen Sitzabschnitt (34), wobei Rückenlehne (33) und Sitzabschnitt (34) mit dem Rahmen (32) verbunden sind und miteinander an einem vom Rahmen (32) entfernten Scheitel (34) verbunden sind, wobei der Kindersitz (31) mit einem abnehmbaren Zusatzsitz (41, 61, 71) versehen ist, **dadurch gekennzeichnet, dass** der Rahmen (32) mindestens ein erstes Rahmenteil (37) und ein zweites Rahmenteil (38) umfasst, wobei die Rückenlehne (33) mindestens mit dem ersten Rahmenteil (37) verbunden ist, und der Sitzabschnitt (34) mindestens mit dem zweiten Rahmenteil (38) verbunden ist, wobei erstes und zweites Rahmenteil (37, 38) gegeneinander um eine Schwenkachse (39) aus einer entfalteten Position in eine gefaltete Position und umgekehrt schwenkbar sind, wobei der Zusatzsitz (41, 61, 71) abnehmbar mit einem ersten Ende mit dem ersten Rahmenteil (37) in der Nähe des vom Scheitel entfernten Endes der Rückenlehne verbunden ist und abnehmbar mit einem zweiten Ende am zweiten Rahmenteil (38) des Kindersitzes (31) in der Nähe des vom Scheitel (36) entfernten Endes des Sitzabschnitts (34) verbunden ist, wobei der Zusatzsitz (41, 61, 71) in einem Abstand vom Scheitel (36) verläuft, wobei der Zusatzsitz (41, 61, 71) gleichzeitig mit dem Kindersitz (31) schwenkbar ist.

2. Kindersitz (31) nach Anspruch 1, **dadurch gekennzeichnet, dass** erstes und zweites Rahmenteil (37, 38) in einer Richtung parallel zur Schwenkachse (39) aus der entfalteten in die gefaltete Position und umgekehrt schwenkbar sind, wobei der Zusatzsitz (41, 61, 71) gleich-zeitig mit dem Kindersitz (31) schwenkbar und faltbar ist.

3. Kindersitz (31) nach Anspruch 1 oder 2, **dadurch gekennzeichnet, dass** der Zusatzsitz (41, 61, 71) in gefalteter Position des Kindersitzes (31) abnehmbar am Kindersitz (31) angebracht ist, während der Zusatzsitz (41, 61, 71) in der entfalteten Position des Kindersitzes (31) im Rahmen (32) gestreckt ist.

4. Kindersitz (31) nach einem der vorangehenden Ansprüche, **dadurch gekennzeichnet, dass** zumindest das erste oder das zweite Ende des Zusatzsitzes (41, 61, 71) über den Rahmen (32) des Kindersitzes (31) gleiten kann.

5. Kindersitz (31) nach einem der vorangehenden Ansprüche, **dadurch gekennzeichnet, dass** der Zusatzsitz (41, 61, 71) mit zumindest einem Rückenlehnenteil (42, 62, 72) und einem Beinstützenteil (44, 63, 73) versehen ist, wobei das Rückenlehnenteil (42, 62, 72) und das Beinstützenteil (44, 63, 73) in einem Winkel zwischen 150° und 180° zueinander verlaufen.

6. Kindersitz (31) nach einem der vorangehenden Ansprüche 1 bis 4, **dadurch gekennzeichnet, dass** der Zusatzsitz (41, 61, 71) mit mindestens einem Rückenlehnenteil (42, 62, 72) und einem Beinstützenteil (44, 63, 73) sowie mit einem zwischen Rückenlehnenteil und Bein-stützenteil angeordneten Gesäßteil (43, 74) versehen ist, wobei das Gesäßteil (43, 74) bezüglich des Rückenteils (42, 62, 72) und des Beinstützenteils (44, 63, 73) in einem Winkel von 150° bis 180° verläuft.

7. Kindersitz (31) nach Anspruch 6, **dadurch gekennzeichnet, dass** das Gesäßteil (43, 74) im Wesentlichen horizontal verläuft.

8. Kindersitz (31) nach einem der vorangehenden Ansprüche, **dadurch gekennzeichnet, dass** der Kindersitz (31) mit einem Kinderrückhaltesystem versehen ist, wobei der Zusatzsitz (41, 61, 71) Öffnungen (45, 46, 47) zum Durchführen des Kinderrückhaltesystems aufweist.

9. Kindersitz (31) nach einem der vorangehenden Ansprüche, **dadurch gekennzeichnet, dass** der Zusatzsitz (41, 61, 71) eine Hängematte ist.

10. Kindersitz (31) nach einem der vorangehenden Ansprüche, **dadurch gekennzeichnet, dass** der Zusatzsitz (41, 61, 71) ausschließlich aus Gewebe besteht.

11. Kinderwagen (1), umfassend mindestens ein Vorderrad (2) und mindestens ein Hinterrad (3), wobei die Räder (2, 3) durch einen zusammenlegbaren Faltmechanismus miteinander verbunden sind, wobei der Kinderwagen (1) aus einer aufgerichteten Position in eine zusammengelegte Position und umgekehrt gefaltet werden kann, wobei der Kinderwagen (1) mit einem Kindersitz (31) und einem Zusatzsitz (41, 61, 71) nach einem der vorangehenden Ansprüche versehen ist.

12. Kinderwagen (1) nach Anspruch 11, **dadurch gekennzeichnet, dass** der Kindersitz (31) und der abnehmbare befestigte Zusatzsitz (41, 61, 71) zumindest aus einer entfalteten Position in eine gefaltete Position und umgekehrt gleichzeitig mit dem Falten des Kinderwagens (1) aus der aufgerichteten in die zusammengelegte Position und umgekehrt faltbar sind.

13. Zusatzsitz (41, 61, 71) nach einem der vorangehenden Ansprüche.

## Revendications

1. Siège pour enfant (31) comprenant au moins un châssis (32), un dossier (33) et une partie d'assise (34), dans lequel le dossier (33) et la partie d'assise (34) sont reliés au châssis (32) et sont reliés l'un à l'autre au niveau d'un sommet (36) à distance du châssis (32), lequel siège pour enfant (31) est pourvu d'un siège supplémentaire détachable (41, 61, 71), **caractérisé en ce que** le châssis (32) comprend au moins une première partie de châssis (37) et une seconde partie de châssis (38), dans lequel le dossier (33) est au moins relié à la première partie de châssis (37) et la partie d'assise (34) est au moins reliée à la seconde partie de châssis (38), lesquelles première et seconde parties de châssis (37, 38) sont pivotantes l'une par rapport à l'autre autour d'un axe de pivotement (39) d'une position dépliée à une position pliée, et vice versa, dans lequel le siège supplémentaire (41, 61, 71) est relié de manière détachable par une première extrémité à la première partie de châssis (37) près d'une extrémité du dossier à distance du sommet et relié de manière détachable par une seconde extrémité à la seconde partie de châssis (38) du siège pour enfant (31) près d'une extrémité de la partie d'assise (34) à distance du sommet (36), lequel siège supplémentaire (41, 61, 71) s'étend à une distance du sommet (36), moyennant quoi le siège supplémentaire (41, 61, 71) étant pivotant simultanément avec le siège pour enfant (31).

2. Siège pour enfant (31) selon la revendication 1, **caractérisé en ce que** les première et seconde parties de châssis (37, 38) sont pliable dans une direction parallèle à l'axe de pivotement (39) de la position dépliée à la position pliée, et vice versa, lequel siège supplémentaire (41, 61, 71) étant pivotant et pliable simultanément avec le siège pour enfant (31).

3. Siège pour enfant (31) selon la revendication 1 ou 2, **caractérisé en ce que** le siège supplémentaire (41, 61, 71) est attaché de manière détachable au siège pour enfant (31) dans une position pliée du siège pour enfant (31), alors que le siège supplémentaire (41, 61, 71) est étiré dans le châssis (32) dans la position dépliée du siège pour enfant (31).

4. Siège pour enfant (31) selon l'une des revendications précédentes, **caractérisé en ce qu'**au moins la première extrémité ou la seconde extrémité du siège supplémentaire (41, 61, 71) est coulissant sur le châssis (32) du siège pour enfant (31).

5. Siège pour enfant (31) selon l'une des revendications précédentes, **caractérisé en ce que** le siège supplémentaire (41, 61, 71) est pourvu d'au moins une partie de dossier (42, 62, 72) et d'une partie de support de jambes (44, 63, 73), lesquelles partie de dossier (42, 62, 72) et partie de support de jambes (44, 63, 73) s'étendent selon un angle entre 150 et 180 degrés l'une par rapport à l'autre.

6. Siège pour enfant (31) selon l'une des revendications précédentes 1 à 4, **caractérisé en ce que** le siège supplémentaire (41, 61, 71) est pourvu d'au moins une partie de dossier (42, 62, 72) et d'une partie de support de jambes (44, 63, 73) ainsi que d'une partie pour fessier (43, 74) située entre la partie de dossier (42, 62, 72) et la partie de support de jambes (44, 63, 73), laquelle partie pour fessier (43, 74) s'étend selon un angle entre 150 et 180 degrés par rapport à la partie de dossier (42, 62, 72) et à la partie de support de jambes (44, 63, 73).

7. Siège pour enfant (31) selon la revendication 6, **caractérisé en ce que** la partie pour fessier (43, 74) s'étend de manière sensiblement horizontale.

8. Siège pour enfant (31) selon l'une des revendications précédentes, **caractérisé en ce que** le siège pour enfant (31) est pourvu d'un système de retenue d'enfant, dans lequel le siège supplémentaire (41, 61, 71) comprend des ouvertures (45, 46, 47) pour étendre le système de retenue d'enfant à travers celles-ci.

9. Siège pour enfant (31) selon l'une des revendications précédentes, **caractérisé en ce que** le siège supplémentaire (41, 61, 71) est un hamac.

10. Siège pour enfant (31) selon l'une des revendications précédentes, **caractérisé en ce que** le siège supplémentaire (41, 61, 71) est composé d'un tissu seulement.

11. Poussette (1) comprenant au moins une roue avant (2) et au moins une roue arrière (3), lesquelles roues (2, 3) sont reliées entre elles à l'aide d'un mécanisme de pliage repliable, laquelle poussette (1) pouvant être pliée d'une position dressée à une position repliée, et vice versa, dans laquelle la poussette (1) est pourvue d'un siège pour enfant (31) et d'un siège supplémentaire (41, 61, 71) selon l'une des revendications précédentes.

12. Poussette (1) selon la revendication 11, **caractérisée en ce que** le siège pour enfant (31) et le siège supplémentaire attaché détachable (41, 61, 71) sont au moins pliables d'une position dépliée à une position pliée, et vice versa simultanément avec le pliage de la poussette (1) d'une position dressée à une position repliée, et vice versa.

13. Siège supplémentaire (41, 61, 71) selon l'une des revendications précédentes.
